Europäisches Patentamt

European Patent Office

Office européen des brevets

(11) Publication number: **0 416 923 A1**

# EUROPEAN PATENT APPLICATION

(21) Application number: 90309765.7

(22) Date of filing: 06.09.90

(51) Int. Cl.5: **G07C 9/00**, G06K 9/24

(30) Priority: 08.09.89 GB 8920367

(43) Date of publication of application:
13.03.91 Bulletin 91/11

(84) Designated Contracting States:
**DE FR GB IT**

(71) Applicant: **NATIONAL RESEARCH DEVELOPMENT CORPORATION**
101 Newington Causeway
London SE1 6BU(GB)

(72) Inventor: **Parks, John Ronald**
**7 Gainsborough Road, Ashley Heath**
**Ringwood, Hampshire BH24 2HY(GB)**

(74) Representative: **Hasler, Christopher**
**Patent Department National Research**
**Development Corporation 101 Newington**
**Causeway**
**London SE1 6BU(GB)**

(54) Method and apparatus for capturing information in drawing or writing.

(57) An electrical signal representative of a signature for verification is generated in electrodes of a piezo-electric layer 16, supported by a ridged area 18, by signing on a region 14 over the layer 16. As the tip of a pen 15 crosses the ridges variations in pressure in the layer 16 occur and varying voltages corresponding to ridge crossings are generated. Signals dependent on these varying voltages are used by a programmed integrated circuit 17 in verifying signatures. In other embodiments one or more comb-like electrodes can be used to, in effect, replace the ridges.

Fig. 1

EP 0 416 923 A1

# METHOD AND APPARATUS FOR CAPTURING INFORMATION IN DRAWING OR WRITING

The present invention relates to methods and apparatus for generating electrical signals as writing or drawing is carried out, the signals being, for example, characteristic of the person carrying out the writing or drawing or of the content of the writing or drawing. The invention is particularly useful in smart cards (that is cards containing a microprocessor or equivalent) and for signature verification in the use of such cards.

Apparatus for identifying characteristics of handwriting by moving a pen across a ridged surface is described in U.S. Patent Specification 4,122,435 and similar apparatus for signature verification is described in U.S. Patent Specification 3,955,178. The same principle is used in the signature verifier described in the IBM Technical Disclosure Bulletin, Volume 18, No. 7, December 1975. Disadvantages of these methods include the use of microphones or a special pen to generate the electrical output signal and problems of using such arrangements with smart cards.

Signature verification using a credit card with a piezoelectric layer is described in GB Patent Application 2,201,125 and a force monitoring system using such a layer as a signature input device is described in GB Patent Application 2,196,164.

According to the first aspect of the present invention there is provided apparatus for obtaining information in electrical signal form as writing or drawing is carried out, comprising
a surface on which writing or drawing can be carried out, or on which flexible sheet material can be placed for writing or drawing,
a layer of material having an electrical or magnetic characteristic which varies with pressure positioned to be subject to pressure variations as a tip of a writing instrument is used to write or draw using the said surface,
means for providing an electrical output signal due to the said characteristic as the said pressure variations occur,
a plurality of anomalies associated with the said layer and spread across an area corresponding to the area on which writing or drawing is to take place, each anomaly affecting the said output signal when crossed by the said tip, and
means for detecting the occurrence of crossings by the said tip of the said anomalies as an indication of information to be obtained.

In a preferred apparatus the layer of material comprises piezoelectric material such as polyvinylidenefluoride (PVdF).

The anomalies may comprise a plurality of ridges positioned to be traversed by a tip of a writing instrument used in writing or drawing.

The ridges are preferably parallel to one another and at right angles to the general direction of writing but the ridges may be random or structured and another suitable form of structure is a regular rectangular grid of ridges.

As the writing instrument is used to draw or write its tip moves over the ridges and in so doing varies the pressure on the layer which has the pressure sensitive characteristic. An electrical signal is generated which provides an indication each time a ridge is crossed. As is described in the specification of U.K. Patent Application 2183071, temporal analysis of a known set of line crossings allows signature verification and at least some forms of data entry. In the present case the ridges, of course, take the place of the lines and temporal analysis of ridge crossings allows signature verification and data capture.

In another arrangement, the anomalies may comprise the "teeth" of a comb-like electrode, or preferably of two interdigitated electrodes, in contact with the piezoelectric material. The "teeth" are usually traversed in a direction generally at right angles to the longitudinal axis of each tooth as writing or drawing is carried out. As pressure is applied to a local region of the piezoelectric material near one of the teeth, that tooth experiences a voltage change. Thus voltage changes appear on the electrode, or alternately on the interdigitated electrodes and temporal analysis of these changes allows signature verification and data entry. Interdigitated electrodes are expected to have the advantages over a single comb-like electrode in that large area contacts, such as where a hand rests, can be distinguished from pen tip contact, and changes in the output signals are more clearly apparent.

The apparatus may be included in a smart card when the said surface may be a portion of the card only. In such a card, the layer of material having a pressure sensitive characteristic and the ridges or the interdigitated electrodes may be positioned only under the said portion.

The apparatus may also include a computer, conveniently a microprocessor, for the temporal analysis of the electrical output signal to provide an indication of, for example, the authenticity of a signature written or the data content of a written message. In its application to the smart card the computer may comprise an integrated circuit embedded in the card and connected to receive the electrical output signal.

Such a card is extremely useful when it is necessary to verify the presence of a particular person before an action, such as monetary transfer, takes place. In one method of using the card including the present invention, the card owner signs the card whereupon the computer is activated to carry out one transaction only and then the card can be used in any required way such as to obtain cash from a cash dispenser or entry to part of a building or immediate transfer of money to pay for a shopping transaction.

According to a second aspect of the present invention there is provided a card, for example for use in monetary or access transactions, comprising a surface portion on which writing can be carried out, a plurality of ridges positioned to be traversed by the tip of a writing instrument used in such writing on the card, and a transducer which responds to variations in pressure applied by the tip on traversal of the ridges when writing is carried out on the said portion of the card.

The transducer preferably comprises a layer of piezoelectric material positioned between the ridges and the writing surface portion but other transducers may be used, such as a microphone for sensing acoustic signals generated as the tip of the writing instrument crosses the ridges.

Preferably an integrated circuit is embedded in the card to carry out temporal analysis of an electrical signal containing information as to the relative times at which the ridges are crossed by the tip of the writing instrument.

In cards according to the first or second aspects, it is usually necessary to provide means for passing a signal from the integrated circuit, for example, to a cooperating device. Such means may for example be conductive (employing contacts on the card), or inductive. Instead the said electrical output signal or the output signal of the transducer may be passed from the card to an external cooperating device.

According to a third aspect of the invention there is provided a method of obtaining information in electrical signal form as writing or drawing is carried out, comprising writing or drawing on a surface with a writing instrument having a tip which causes pressure variations in a layer of a material which has an electrical or magnetic characteristic which varies with pressure, deriving an electrical output signal due to the said characteristic as the said pressure variations occur, the output signal also being affected by a plurality of anomalies associated with the said layer and spread across an area corresponding to the area on which writing or drawing is to take place, each anomaly affecting the said output signal when crossed by the said tip, and detecting the occurrence of crossings by the said tip of the said anomalies as an indication of information to be obtained.

According to a fourth aspect of the invention there is provided apparatus for obtaining information in electrical signal form as writing or drawing is carried out, comprising a surface on which writing or drawing can be carried out, or on which flexible sheet material can be placed for writing or drawing, a layer of a material which has an electrical or magnetic characteristic which varies with pressure positioned to be subject to pressure variations as a tip of a writing instrument is used to write or draw using the said surface, and means for providing an electrical output signal due to the said characteristic as the said pressure variations occur.

The invention also includes a method equivalent to the fourth aspect of the invention.

Certain embodiments of the invention will now be described by way of example with reference to the accompanying drawings in which:-

Figure 1 is an exploded three dimensional view of a smart card according to the invention,

Figure 2 is a view of a Zip-Zap machine according to the invention, and

Figure 3 is a view of a docket according to the invention shown with part of a Zip-Zap machine.

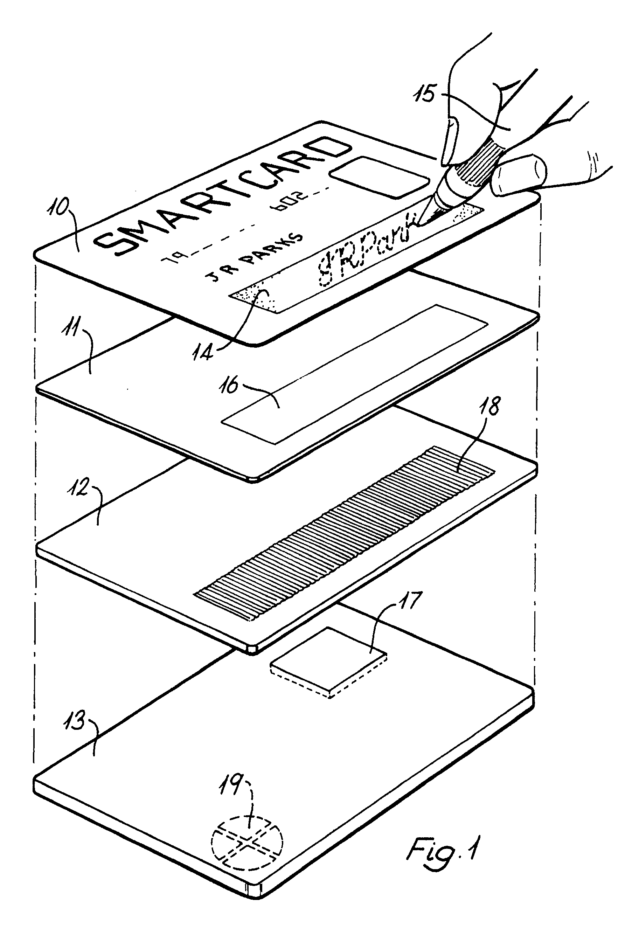

In Figure 1 a laminated smart card comprises four layers 10 to 13 which are shown spaced apart but in the finished card are laminated together. The top layer has printed on it various information about the card and its owner and also carries other authentication means. In addition there is an area 14 which is delineated as an area in which signatures are to be written although usually no visible signature appears after the card has been signed. Clearly if a signature does appear then it can be easily copied by an unauthorised person who wishes to use the card but since temporal analysis of ridge crossings depends on signature dynamics such a signature would nearly always be rejected. A ball point pen 15 is shown in Figure 1 and if no visible signature is required the surface of the area 14 can be of a type which is not marked by a ball point. Any other pen, pencil or stylus with a fairly hard tip may be used.

The layer 11 contains a PVdF area 16 corresponding in position to the area 14. The PVdF area may have electrodes along its edges or on its upper and lower surfaces and these electrodes are connected by means not shown to an integrated circuit 17 embedded in the layer 13.

The layer 12 has a ridged area 18 containing ridges which it is expected may each be a few microns from trough to peak. The area 18 corresponds in position with the areas 14 and 16 so that as the pen 15 is used to form a signature, pressure variations occur in the PVdF portion 16 due to the pen crossing the ridges. In order to ensure that pressure variations occur both the area 14 and the area 16 are flexible and are deflected by writing pressure.

The card also includes means for passing a signal to cooperating apparatus. Thus if the integrated circuit authenticates the signature then means are provided to pass this information from the card. Such means are known and may comprise electrical connections 19 shown on the underside of the layer 13 and which when the card is positioned in a cooperating machine connect to circuits in the machine. As an alternative an inductive link may be provided.

The integrated circuit 17 may include ROM to store a program for the integrated circuit and for storing characteristics of a person's signature and also RAM for use by the circuit. Alternatively ROM and RAM may be in the form of additional embedded integrated circuits.

The method of temporal analysis of signatures for verification and of data for entry is described in the above mentioned specification No. 2,183,071 and depends on detecting the tip of a pen crossing lines on a writing surface. For the embodiment described above in relation to Figure 1 pressure variations corresponding to the pen crossing ridges are detected and used in the same way as line crossings in Specification 2,183,071. For example the total number of ridge crossings or the rate of ridge crossings in all or part of a signature or data character may be used as features for use in recognition.

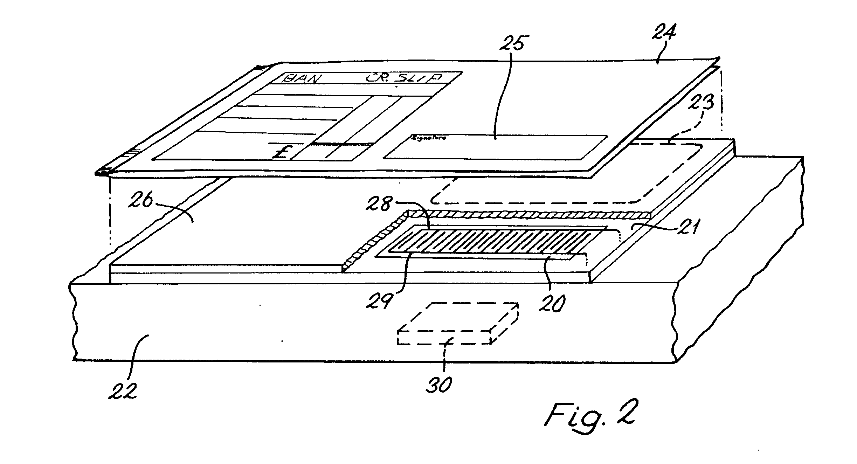

In the embodiment of the invention shown in Figure 2, a PVdF region of a layer 21 is located on the base 22 of an otherwise conventional Zip-Zap device, the rest of which is not shown. A Zip-Zap device takes an embossed credit card and a preprinted flimsy docket 2A of two sheets and a carbon layer and "writes" the details of the credit card on the docket by sliding a moving bridge (not shown) across and in contact with the docket, the card being under the docket in, for example, the area bounded by the dotted line 23. The docket 24 comprises at least two sheets which are then separated, one being kept by the card owner and the other by the other party to a transaction. Carbon paper or a captive carbon or equivalent is also present in the docket to allow the card details to be "written" on sliding the bridge. In operation the docket is in contact with the card and the layer 21, and the card owner signs in an area 25.

The PVdF region 20 is protected by a flexible layer 26 which extends completely across the layer 21 but is ony partially shown. Two interdigitated electrodes 28 and 29 are positioned on one face of the PVdF region 20 and another electrode (not shown) positioned on the opposite face. The tip (not shown) of a pen used for signing then generates local pressures in the PVdF layer and when the tip passes over a "tooth" of one of the electrodes 28 and 29 a voltage change occurs in that electrode. Thus as the signature is written a series of voltage changes occurs on alternate ones of the electrodes 28 and 29 and these changes corresponding to electrode crossings are registered and then analysed, in a similar way to line or ridge crossings as described above, to allow signature verification or data entry. The analysis is carried out, for example, by a microprocessor 30 positioned in the base 22 and connected (connections not shown) by way of an analog-to-digital converter (A/D) (not shown) to the electrodes 28 and 29, and the other electrode. The microprocessor detects the occurrence of each electrode crossing, that is the crossing by the pen tip of an electrode "tooth" by comparing current and previous A/D outputs to determine maxima and minima which correspond to the tip being above and between a tooth, respectively. By subtracting the signals from the electrodes 28 and 29 a correction can be made for large area contacts, such as those which occur when a finger or hand is rested on the area 25. Voltages due to these large area contacts are cancelled but those due to the tip of a pen are not.

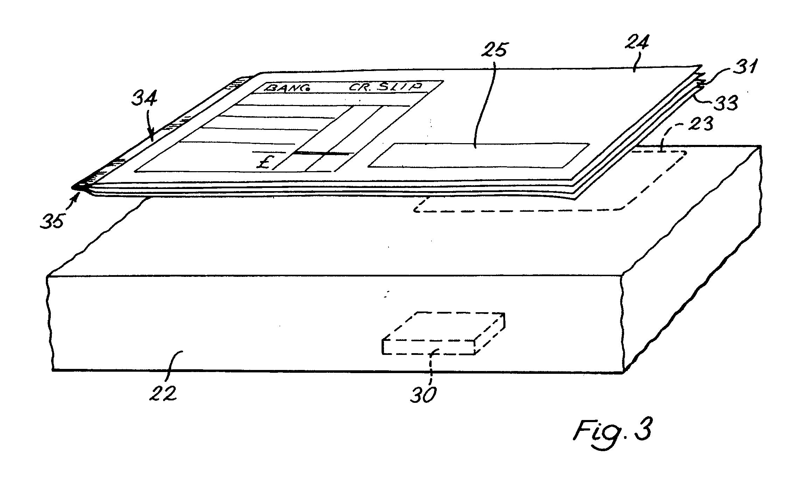

In the arrangement shown in Figure 3, the docket includes two more layers: a sheet 31 of PVdF metallised on both sides to give electrodes and a sheet 33 which has a rough upper surface which functions to cause varying pressures as a pen is used to sign a signature in the area 25. Thus the rough surface functions in a similar way to the ridged area 18 and may be ridged. The electrodes on the sheet 31 are insulated from one another and brought out separately to upper and lower surfaces of the docket in the regions 34 and 35 where the Zip-Zap machine has corresponding separate electrodes (not shown) which are clamped on to the docket when the slider is used to emboss the card details on the docket. The electrodes or the Zip-Zap machine have individual connections to the microprocessor 30 by way of an AID.

In an alternative arrangement the PVdF layer of the docket has at least one surface with a comb-shaped electrode (and preferably two surfaces with interdigitated comb electrodes) and the rough surface is omitted.

The invention may be put into practice in many other ways than those specifically described above. For example a single comb electrode may be used instead of a pair of interdigitated combs but then detecting large area contacts by the means described above is lost. As an alternative a single narrow, sinuous electrode making many crossings of the writing area normal to the general direction of writing may be used.

Apparatus similar to the embodiments described in relation to Figures 1, 2 or 3 may, as has been mentioned, be used for data entry by the recognition of alphanumeric symbols as is also described in the above mentioned specification No. 2,183,071.

**Claims**

1. Apparatus for obtaining information in electrical signal form as writing or drawing is carried out, comprising
a surface on which writing or drawing can be carried out, or on which flexible sheet material can be placed for writing or drawing,
a layer of a material which has an electrical or magnetic characteristic which varies with pressure positioned to be subject to pressure variations as a tip of a writing instrument is used to write or draw using the said surface, and
means for providing an electrical output signal due to the said characteristic as the said pressure variations occur,
characterised by a plurality of anomalies associated with the said layer and spread across an area corresponding to the area on which writing or drawing is to take place, each anomaly affecting the said output signal when crossed by the said tip, and
means for detecting the occurrence of crossings by the said tip of the said anomalies as an indication of information to be obtained.

2. Apparatus according to Claim 1 characterised in that the material of the said layer comprises a piezoelectric material.

3. Apparatus according to Claim 1 or 2 characterised in that the anomalies comprise irregularities in a rough surface which is positioned to cause additional pressure variations as writing or drawing is carried out.

4. Apparatus according to Claim 3 characterised in that the anomalies comprise a plurality of ridges positioned to be traversed by the tip of a writing instrument in writing or drawing using the apparatus and thus cause pressure variations in the material of the said layer.

5. Apparatus according to Claim A characterised in that at least some of the ridges are parallel to one another.

6. Apparatus according to Claim 3 or A characterised in that the layout of the ridges is structured.

7. Apparatus according to Claim 1 or 2 characterised in that the anomalies comprise portions of an electrode for sensing local voltages generated by the said layer, the electrode being narrow and shaped to be crossed many times by the said tip as writing or drawing is carried out.

8. Apparatus according to Claim 2 characterised in that the anomalies comprise portions of two interdigitated electrodes in contact with the piezoelectric material and having "teeth" which are traversed in a direction generally at right angles to the longitudinal axis of each tooth as writing or drawing is carried out.

9. Apparatus according to Claim 2 characterised in that the anomalies comprise portions of a comb-like electrode in contact with the piezoelectric material having "teeth" which are traversed in a direction generally at right angles to the longitudinal axis of each tooth as writing or drawing is carried out.

10. Apparatus according to any preceding claim characterised by a computer programmed for signature verification and/or recognition of alphanumeric symbols for data entry.

11. Apparatus according to any preceding claim characterised in that a card, for example for use in monetary or access transactions, forms at least part of the apparatus.

12. Apparatus according to any preceding claim characterised in that at least one of the following is formed by at least part of a docket for example for monetary or access transactions:
the said surface,
the said layer, and
the plurality of anomalies.

13. A method of obtaining information in electrical signal form as writing or drawing is carried out, comprising
writing or drawing on a surface with a writing instrument having a tip which causes pressure variations in a layer of a material which has an electrical or magnetic characteristic which varies with pressure, and
deriving an electrical output signal due to the said characteristic as the said pressure variations occur, characterised in that the output signal is also affected by a plurality of anomalies associated with the said layer and spread across an area corresponding to the area on which writing or drawing is to take place, each anomaly affecting the said output signal when crossed by the said tip, and
the occurrence of crossings by the said tip of the said anomalies is detected as an indication of information to be obtained.

14. A card for use in the method of Claim 13, comprising a surface portion on which writing can be carried out, and characterised by a plurality of ridges positioned to be traversed by the tip of a writing instrument used in such writing on the card, and a transducer which responds to variations in pressure applied to the tip on traversal of the ridges when writing is carried out on the said portion of the card.

15. A docket for use in the method of Claim 13 comprising a sheet on which writing is carried out, characterised by a layer of piezoelectric material positioned in the docket to be subject to pressure variations as a tip of a writing instrument is used to write on the said sheet, and

an electrode for the layer with a connection for electrical contact externally of the docket.

16. A docket according to Claim 15 characterised by

a plurality of anomalies associated with the said layer and spread across an area corresponding to the area on which writing takes place, each anomaly affecting an electrical signal in the electrode when writing takes place.

17. A card, for example for use in monetary or access transactions, comprising a surface portion on which writing can be carried out, characterised by a plurality of ridges positioned to be traversed by the tip of a writing instrument used in such writing on the card, and a transducer which responds to variations in pressure applied to the tip on traversal of the ridges when writing is carried out on the said portion of the card.

18. A card according to Claim 17 characterised in that the transducer comprises a layer of piezoelectric material positioned between the ridges and the writing surface portion.

19. A card according to Claim 17 or 18 characterised by an integrated circuit embedded in the card.

20. A card according to Claim 19 characterised in that the integrated circuit includes a computer programmed for signature verification on data entry by the recognition of alphanumeric symbols.

21. Apparatus for obtaining information in electrical signal form as writing or drawing is carried out, comprising

a surface on which writing or drawing can be carried out, or on which flexible sheet material can be placed for writing or drawing,

a layer of a material which has an electrical or magnetic characteristic which varies with pressure positioned to be subject to pressure variations as a tip of a writing instrument is used to write or draw using the said surface, and

means for providing an electrical output signal due to the said characteristic as the said pressure variations occur.

Fig.1

Fig. 2

Fig. 3

EP 0 416 923 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D,Y | GB-A-2 196 164 (DE LA RUE SYSTEMS LTD)<br>* page 2, lines 65 - 123; figures 1, 2 *<br>- - - | 21,1-20 | G 07 C 9/00<br>G 06 K 9/24 |
| Y,D | IBM TECHNICAL DISCLOSURE BULLETIN. vol. 18, no. 7, December 1975, NEW YORK US pages 2374 - 2375; J. A. Darringer et al.: "Speed Pen"<br>* the whole document *<br>- - - | 1-20 | |
| Y,D | GB-A-2 201 125 (DE LA RUE SYSTEMS LTD)<br>* page 3, line 28 - page 4, line 17; figures 2, 3 *<br>- - - - - | 11,12,<br>14-20 | |

|  |
|---|
| **TECHNICAL FIELDS SEARCHED (Int. Cl.5)** |
| G 06 K<br>G 07 C |

The present search report has been drawn up for all claims

| Place of search | Date of completion of search | Examiner |
|---|---|---|
| The Hague | 04 December 90 | SONIUS M.E. |

CATEGORY OF CITED DOCUMENTS
X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

  

& : member of the same patent family, corresponding
    document